Europäisches Patentamt

European Patent Office

Office européen des brevets

(19)

(11) Publication number: 0 254 482
A1

(12) **EUROPEAN PATENT APPLICATION**

(21) Application number: 87306286.3

(22) Date of filing: 16.07.87

(51) Int. Cl.4: **A47J 27/21** , A47J 27/62

(30) Priority: 24.07.86 GB 8618132

(43) Date of publication of application:
27.01.88 Bulletin 88/04

(84) Designated Contracting States:
AT BE CH DE ES FR GB IT LI NL SE

(71) Applicant: D.H. HADEN LIMITED
Mount Road Burntwood
Walsall West Midlands WS7 0AW(GB)

(72) Inventor: Haden, John Denis
Mount Road Burntwood
Walsall West Midlands, WS7 0AW(GB)
Inventor: Duxbury, Eric
Mount Road Burntwood
Walsall West Midlands, WS7 0AW(GB)

(74) Representative: Yelland, William Alan et al.
H.N. & W.S. SKERRETT Rutland House 148,
Edmund Street
Birmingham B3 2LQ(GB)

(54) Electrical apparatus.

(57) Electrical apparatus comprising an appliance (10) and an optional support (70). The appliance has a vessel; an electrical device (17) mounted centrally on the bottom (13) of the vessel together with electrical control means (23) so as to be protected in a hollow base (40) below the bottom (13). Mechanical means (22) extends from the base to a position convenient for manual actuation. The base (40) may be stood on the support (70) so that electrical terminal pins (30) engage in electrical supply sockets (72) in the support, and the support may incorporate a supply switch (100) to isolate the sockets when the appliance is lifted. The mechanical means may also actuate the supply switch, and may be responsive to the vessel contents being boiled to produce steam.

FIG. 1B.

## ELECTRICAL APPARATUS

This invention concerns electrical appliances, appliance support apparatus amd other forms of electrical apparatus.

There are many known forms of electrical apparatus which incorporate vessels to hold a materials such as a liquid, a solid or a mixture thereof for processing e.g. heating, mixing or grinding, by an electrical device incorporated in the apparatus.

In some forms of such apparatus, such as coffee pot warmers, the vessel rests on and is removable from a base part of the apparatus, which base part incorporates the electrical device and all control means necessary for controlling the device. Such vessels can be designed freely for convenience and safety of handling, visual appeal, and low cost manufacture. However, in other forms of apparatus, such as electric kettles, the vessel and electrical device are combined and inseperable, so that the design of such apparatus is restricted by problems including the need to suitably accommodate the elctrical device, the necessary control means and the electrical connectors, and to provide for satisfactory and safe electrical operation of the apparatus.

Attempts to solve the problem of electrical safety have resulted in further problems of inconvenience to the user, excessive cost and complexity of manufacture, excessive bulk of the apparatus, and vulnerability of the electrical device and/or electrical parts of the control means to impact damage.

An object of the invention is to enable at least some of said problems to be avoided or reduced.

According to the present invention there is generally provided electrical apparatus comprising a vessel, an electrical device in a lower portion of the vessel, and control means to control said device; wherein the vessel comprises and interior bounded by a bottom and a wall extending upwards from said bottom, and an actuation space which is external to said interior and which extends inwardly to below said bottom; wherein said control means comprises electrical switch means actuable from below said bottom to close an electrical supply connection to the electrical device, and a non-electrical manually actuable mechanism; wherein said manually actuable mechanism comprises a part exposed manual displacement, and extends inwardly in said space below said bottom to actuate said switch means; and wherein the switch means and electrical device are connected together to form an assembly secured to said bottom.

According to the present invention there is further provided electrical apparatus of a kind comprising a vessel, and electrical device and control means to control said device; the vessel comprising an interior bounded by a bottom and a wall extending upwards from said bottom, and an actuation space which is external to said interior and which extends upwardly at least partially alongside said wall; and said control means comprising switch means actuable, by a non-electrical manually actuable mechanism, to close an electrical supply connection to the electrical device; the apparatus of the invention being characterised in that;

a) said electrical device is supported by said bottom,

b) said switch means is actuable from below said bottom, and

c) said manually actuable mechanism extends upwardly in said actuation space to a part exposed manual displacement, and extends inwardly from said sapce to below said bottom to actuate said switch means.

The mass of the electrical components is thus centralised in a lower part of the apparatus and can be protected and concealed by a base skirt and, optionally, a detachable base member of the apparatus, so that the vessel can be made very pleasant to handle, attractive in appearance, electrically safe and very convenient to operate.

There is disclosed in our British Patent Application No. 8600087, published on 6 August 1986 under No. GB2170662A, electrical socket apparatus, for example, for safely supporting and supplying electricity to an electrical appliance provided with at least live and neutral terminal pins; the apparatus including locating means engageable by the appliance to locate the appliance in a predetermined position; sockets to receive respective pins; an electrical conductors in each socket; switch means actuable by the appliance being placed in said predetermined position to make an electrical connection to at least one of said electrical conductors; and a displaceable member which projects into said sockets and is movable against a bias to actuate said switch means, to prevent risks e.g. electric shocks and overheating of contacts, and to hinder misuse of the apparatus. The switch means may alternatively be actuated by a toggle mechanism. A shutter is pivoted by an earth pin of the appliance so as to uncover the live and neutral sockets.

The present invention, and said apparatus of the invention, is particularly suited for use in conjunction with such socket apparatus.

Accordingly, the invention further generally provides electrical apparatus comprising an appliance and support apparatus; the appliance compressing a vessel having electrical connectors in a hollow base thereof to engage electrical connector means in the support apparatus, when the appliance is supported upon the support apparatus in a predetermined position, for supplying electrical power to an electrical device of the appliance via the support apparatus; wherein a manually actuable mechanism extends, from a part exposed for manual displacement, inwardly in a hollow base of the appliance, for actuating electrical switch means of the electrical apparatus for electrically controlling said device.

The support apparatus is preferably arranged so that the weight of the appliance can be utilised to hold the electrical connectors in sockets, provided by the connector means, against ejection forces tending to eject the connectors from the sockets.

The switch means may be part of the appliance and/or part of the support apparatus.

The present invention further provides electrical apparatus comprising an applicance and support apparatus; the appliance having electrical connectors in a base thereof to engage electrical connector means in the support apparatus, when the appliance is supported upon the support apparatus in a predetermined position, for supplying electrical power to the appliance via the support appliance; wherein the appliance comprises a vessel and an electrical immersion heater secured through a raised portion of a bottom of a vessel; and wherein an electrically heatable portion of said heater extends in a trough in said bottom below the level of said raised portion.

Said vessel may be a moulding of plastics material; and a metal heat shield may be clamped by said heater to said raised portion, and shaped to extend into the trough to below the heatable portion.

The invention will be described further by way of example with reference to the accompanying diagrammatic drawings, wherein:-

FIGURES 1A and 1B show apparatus of the invention, in vertical cross-section;

FIGURE 2 shows a transverse section on the line II-II;

FIGURES 3 and 4 show a power supply switch of the apparatus; and

FIGURES 5 to 11 show details of modified forms of the apparatus.

The electrical apparatus comprises and appliance 10 and; in most embodiments, support apparatus 70.

The appliance, in this embodiment, is a water boiling vessel 10 having a hollow moulded plastics body 11 the interior of which is bounded by a wall 12 upstanding from an internal bottom 13, which bottom 13 has a raised central portion 14 to provide an annular trough 15 around the central portion 14 and a downwardly open recess 16 below the central portion 14.

The vessel has an electrical device 17 in the form of an portion 14 so that a heating portion 19 of the heater is suspended in the trough above a metal heat shield 20 claimped in place by a head 21 of the heater.

The apparatus 10 is provided with control means 22 which, in this embodiment, comprises electrical switch means 23, non-electrical manually actuable mechanism 24 and a steam responsive mechanism 25, all provided on the vessel.

The switch means 23 is mounted in the head 21 and comprises a switch 26 which responds, to switch off the heater, upon overheating of the head 21 and upon a control lever 27 of the mechanism 24 being moved from the position shown to push a projecting switch actuating member 28 upwards. The heater 18 and switch means 23 are assembled together to form an assembly 29 mounted on the bottom, which assembly is provided with electrical connectors 30 comprising pins 31 and 32, which pins project downward, through a detachable base member 33 of the vessel.

The metal heat shield member 20 has an apertured upper portion 34 sandwiched between seals 35 which are interposed between a flange 36 of the head 21 and the central portion 14; has a frusto-conical intermediate portion 37; and has, at the bottom of the portion 37, an outer lower portion 38. The latter may have a peripheral upstanding wall part 39 (shown in broader lines) between the wall 12 of the body and the portion 19 of the heater, so that the member 20 serves as a suspended liner for the trough 15, which liner is spaced apart from the body surface defining the trough, except possibly for contact therewith at the brim of the wall part 39.

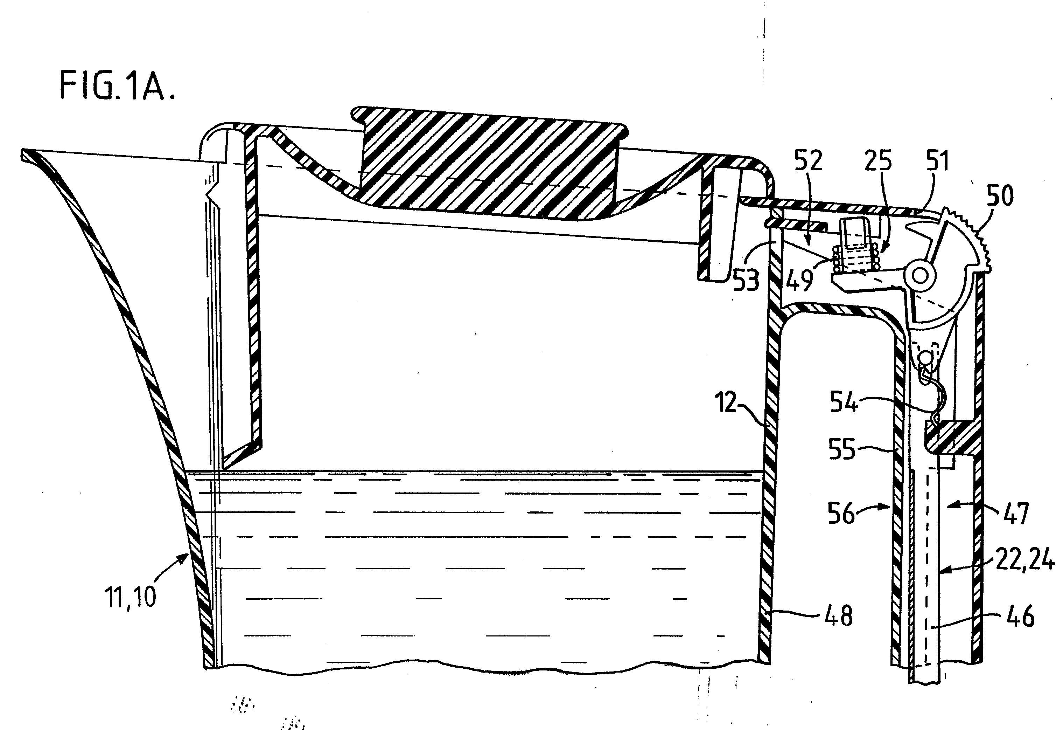

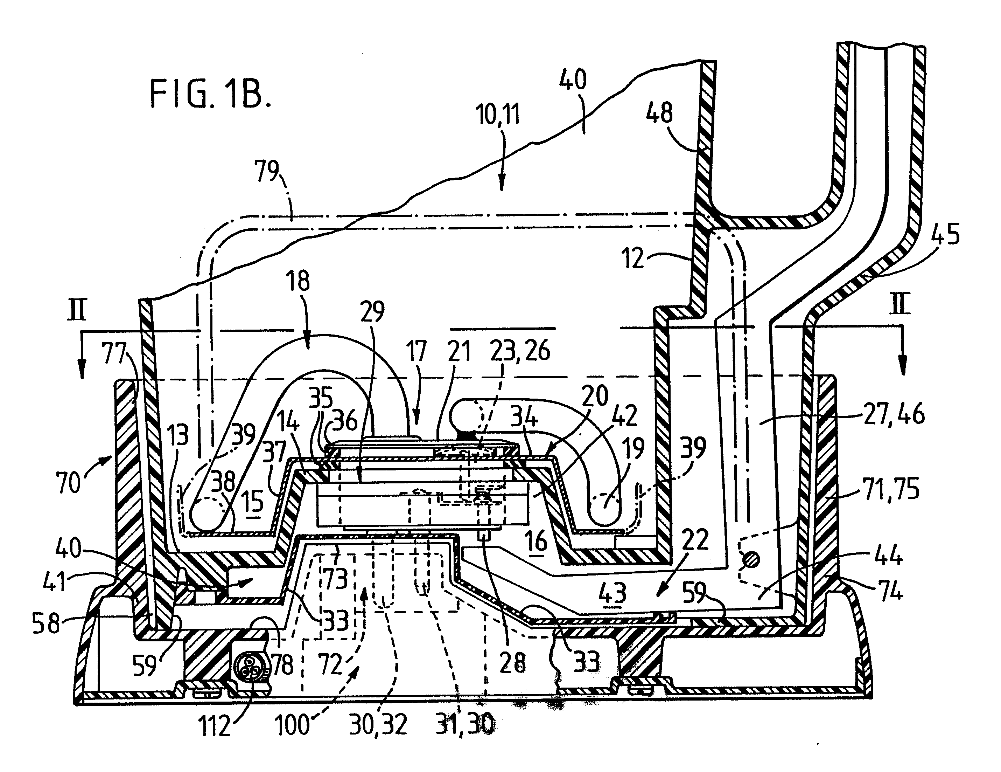

The vessel 10 has a hollow base 40, below said bottom 13, within a peripheral base skirt 41; and said base member 33 serves as a partition or closure to leave a space 42, between the bottom 13 and the base member 33 to house the switch means 23 and a lower part or limb 43 of the contact lever 27. The lower part 43 extends outwards, within the hollow base 40, from below said actuating member 28 to an elbow 44 pivotally-mounted on a cover member 44 releasably connected elbow 44 pivotally-mounted on a cover member 44 releasably connected to the body 11. An upstanding part 46 of the control lever extends upwards from the elbow 44, within an actuation space 47 which is external if the interior of the vessel 10 and which extends upwards within a side part 48 of the vessel. The steam responsive mechanism 25 is provided in an upper part of the actuation space 47, and comprises a heat sensitive member 49 of known form which changes shape when exposed to steam to rotate a part 50, which is exposed for manual operation, anticlockwise about a pivotal axis from an "on" position, in which said part is shown in FIGURES 1A and 1B, to an "off" position in which the part 50 abuts a stop 51.

The portion of the actuation space 47 around the heat sensitive member 49 constitutes a steam space 52 which is connected to the interior by passage means 53 comprising a steam vent adjacent the top of the wall 12 to direct steam from the interior onto said member 49. The part 50 is connected to the upper end of the upstanding part 46 to entrain the mechanisms 24 and 25 to move in unison, and the mechanisms are biased by an over centre spring 54 so as to be stable only in said "on" and "off" positions.

The side part 48 of the vessel comprises the removable side cover member 45, which carries said mechanisms 24 and 25, a portion of the wall 12 and an extension 55 of said body 11, which extension 55 serves as part of a hollow handle 56 of the vessel 10.

The support apparatus 70 is provided with locating means 71, which locating means serves to guide the appliance 10 as it is lowered to engage the pins 31, 32 in electrical connector means 72 of a power supply switch 100 provided below a raised and apertured central part 73 of a body 74 of the support apparatus, and serves to restrain the appliance 10 against being toppled from the support apparatus 70. The apparatus 70 is further provided with holding means 80 to hold the apparatus upon a surface on an article such as worktop or table. The power supply switch 100 is generally of a kind disclosed in our copending application No. 8600087, which is arranged to be actuated by said pins 31, 32 being inserted into the connector means 72 so as to be held in an "on" condition by the presence of the appliance 10 in said position on the support apparatus 70.

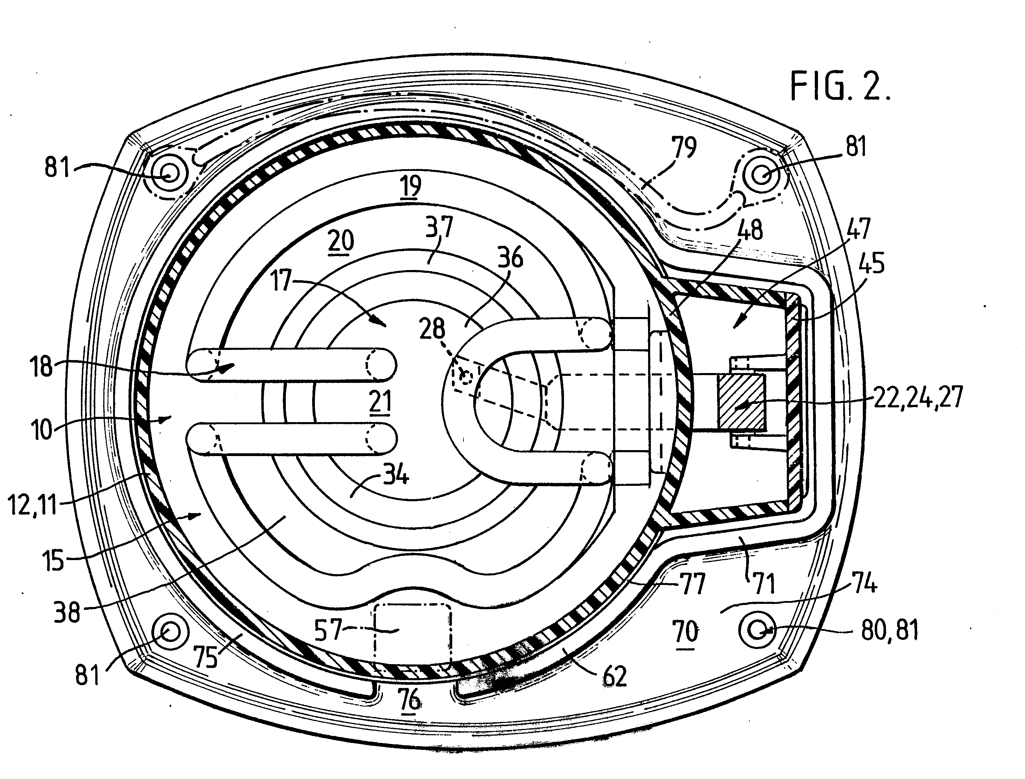

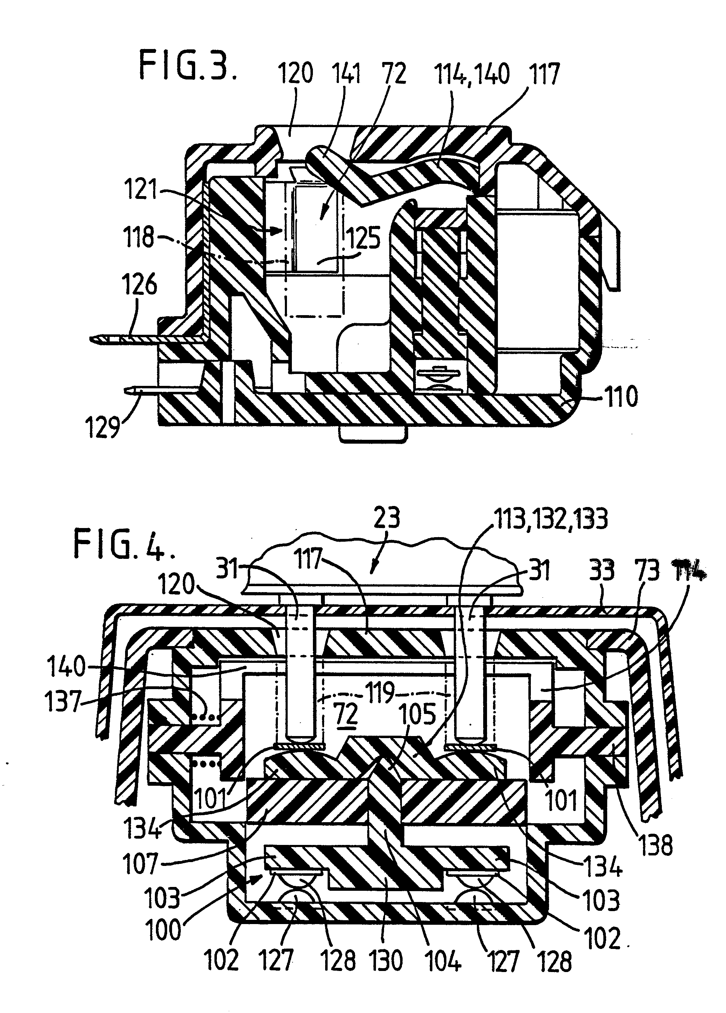

The locating means 71 comprises an upstanding peripheral wall 75 of the body 74, which wall 75 may be interrupted at 76 to expose an optional water lever indicator 57 set in the side of the vessel 10 as indicated in broken lines in Fig. 2, and which wall provides an internal guide surface 77 which co-operates with lower portions of a peripheral surface 58 of the vessel. The body 74 also provides an internal floor 78 on which rest base portions 59 of the vessel 10. The vertical extent of the surface 58 is sufficient to prevent the vessel being toppled from the body 74, e.g. it extends upwards for about 6 cm to co-operate with about 25% of the vertical extent of the surface 58. However, if required, the locating means 71 may comprise supplementary locating means in the form of one or more upstanding devices 79 secured to the body 74 to engage the vessel a few centimetre, e.g. upto ten centimetres, above the wall 75 in the event of the vessel being tilted by more that a few degrees, e.g. 5°, relative to the body 74. One, of a pair of such devices arranged to extend around more that 50% of the periphery of the vessel, is indicated in broken lines in FIGURES 1A and 3 and is provided by an inverted U-shaped metal bar device 79, which can be held to the body 74 by fasteners (not shown), inserted through apertures 81 of the holding means 80, to secure the support apparatus to a surface of an article such as a shelf or worktop.

The power supply switch 100 incorporates the connector means 72 and has a body 110 provides an earth socket 118 and live and netral sockets 119, indicated in broken lines, which sockets extend downwards from openings 120 in a top part 117, each socket being a space within the body 110, open to the interior 121 of the body 110, to accommodate the repective live pin 31, earth pin 32 or neutral 31 of the electrical device.

The body 110 supports an earth conductor 125 and live and neutral conductors 124. The earth conductor 125 extends into the socket 118, for enbracing the earth pin, and has an input terminal 126. The live and neutral conductors 124 are each U-shaped having an upper leaf spring part 101 which extends across the respective socket 119, and a lower leaf spring part 102 which carries a movable contact 128 of the switch 100. The body 110 supports two fixed contacts 127 of the switch 100, and each fixed contact is connected to a respective input terminal 129 for connection to an electricity supply via a mains supply lead cable 112 of the apparatus.

The switch 100 has an actuating member 130 slidably mounted by a partition 107 of the body. The member 130 is of T-shape of provide oppositely directed arms 103 resting on the parts 102, and a central stem 104 which projects forwards through the partition 107 to provide a fulcrum 105.

A displaceable member 113 comprises a balance member or beam 132 which has a central portion 133 between portions 134 which portion project across the sockets 119 behind the parts 101 which rest on the portions or arms 134. The portion 133 rests on the fulcrum 105 so that the member 113 is urged to a normal position by a bias provided by the parts 102. In the normal position, the beam 132 is held spaced apart from a base 136 provided by the partition 107 at the rear of each of the live and neutral sockets 119.

A shutter 114 is pivotally supported by the body 110 and is biased, by a shutter spring 137 to a normal position, in which a body 140 of the shutter is disposed betweem the openings 120 and the live and neutral conductors so as to occupy and block front poritions of the live and neutral sockets 119, and in which normal position an arm 141 of the shutter extends into the earth socket 118. The shutter 114 is supported at each end by trunnions 138 so as to be arcuately movable about an axis passing through the live and neutral sockets.

The socket apparatus is arranged so that as the vessel is lowered towards the openings 120 (to cause the earth pin 32 to enter the earth socket 118 to make contact with and be gripped by the earth conductor 125) entry of the live and neutral pins 31 into the live and neutral sockets is at first obstructed by the body 140 until the earth pin has moved the arm 141 to swing the body 140 from the live and neutral sockets 119.

Further movement of the pins 31, 32 into the sockets causes the ends of the live and neutral pins 31 to make contact with the live and neutral conductors, whilst the switch remains open so that the live and neutral conductors are not energised; and further rearwards movement causes the live and neutral pins to bend the parts 101 to move the beam 132 rearwards against the bias, thereby causing the arms 103 to bend the parts 102 rearwards to force both of the movable contacts 128 against the respective fixed contacts 127 thereby closing the switch 100.

The invention is not confined to details of the foregoing example, and many variations are possible within the scope of the invention as defined by the appended claims. For example, the power supply switch may be of any suitable form, or may be omitted to leave only an electrical connector device in the support apparatus; and the lever 49 may be arranged to actuate the power supply switch by means of a power switch actuating member provided in or on the raised control part 115 of the support apparatus.

The lever 49 may be arranged to actuate the power supply switch by means of a power switch actuating member provided in or on the raised central part 115 of the support apparatus.

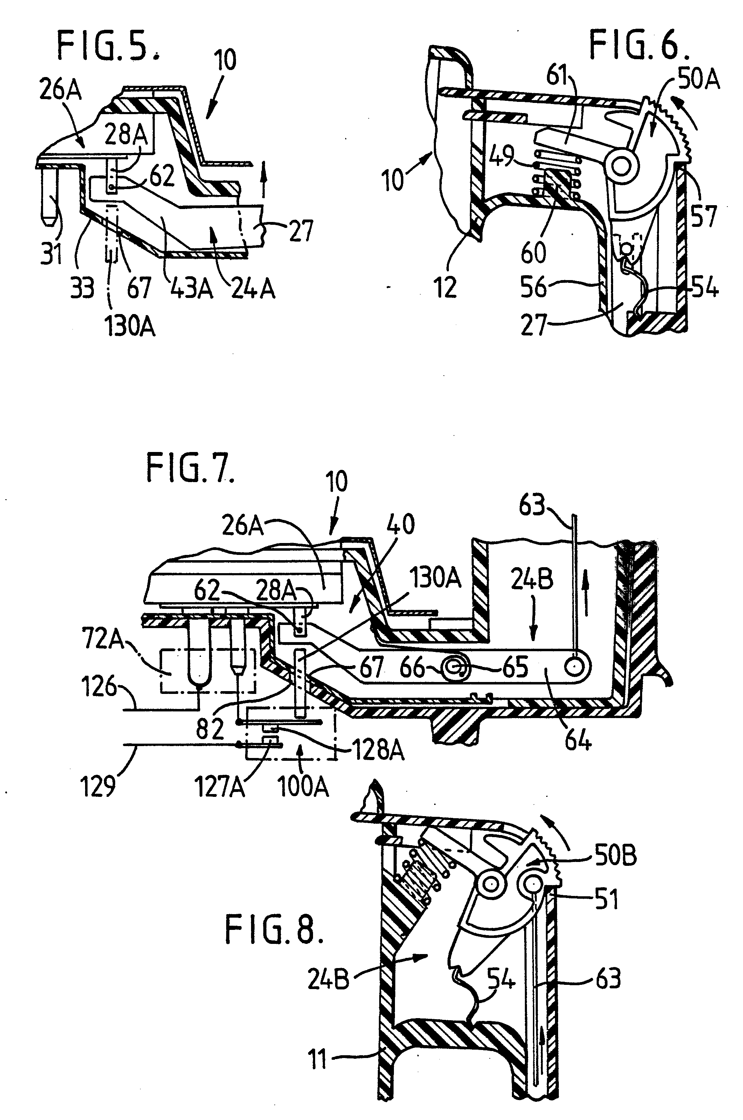

Some of these and other modifications are illustrated in FIGURES 5 to 11, in which FIGURES reference numbers already appearing in FIGURES 1 to 4 are used to indicate those parts which are common, whereas reference numbers with a suffix letter A, B, or C are used in respect of modified parts, and all such parts are not re-described, for the sake of brevity.

Referring to FIGURES 5 and 6, the appliance 10 has a modified manually actuable mechanism 24A in which the "on/off" motion of the lever 27 is reversed, by mounting the heat sensitive member 49 on a post 60 on the handle 56, so as to thrust an arm 61 on the part 50A upwards to the "off" position in which the mecanism 24A is shown in these FIGURES; the lower limb 43A and actuating member 28A are modified so as to be connected by a connector 62; and the switch 26A is arranged so as to be closed by a downwards instead of upwards movement of the member 28A.

Referring to FIGURES 7 and 8, the appliance 10 again has a manually actuable mechanism 24B and switch 26A in which the "on/off" motions are reversed, but in this embodiment the part 50B is connected by a mechanical tension cable or cord 63 to a short lever 64 which extends inwards in the hollow base 40 to a connector 62. The lever 64 is pivotally mounted on the body 11 by a pivot 65 intermediate its ends, and a bias spring 66 acts on the lever 64 to keep the cord 63 in tenion and to provide the thrust necessary to actuate the switch 26A.

The support apparatus 70 may have an alternate form of power supply switch 100A to supply power to separate socket connector means 72A which switch includes an actuating member 130A which extends upwards (from contacts 129A) through apertures 82 and 67 in the part 73 and the base member 33 respectively, so as to be movable by the lever 64 (or the limb or part 43A of the modified mechanism shown in FIGURE 5).

In the forms of the electrical apparatus in which the control means is arranged to actuate the power supply switch in the support apparatus, the switch 26 may be modified so as to omit the actuating member 28 or 28A; or the switch 26 may be omitted and the elctrical device connected directly to the terminal pins, and the device, preferably incorporating a protective cut-out mechanism either to interrupt a connection between the element and the pins, or to mechanically displace an actuation member, substitued for the member 28 or 28A to actuate the actuating member 130A eg via the lever or part 64 or 43A by displacing the latter to the "off" position.

Furthermore, the appliance may, with no or minimal modification, be employed without the support apparatus, by securing a mains supply electrical lead to terminal connectors of suitable form, or by providing a mains supply lead with socket connector means to receive the pins 31 and 32.

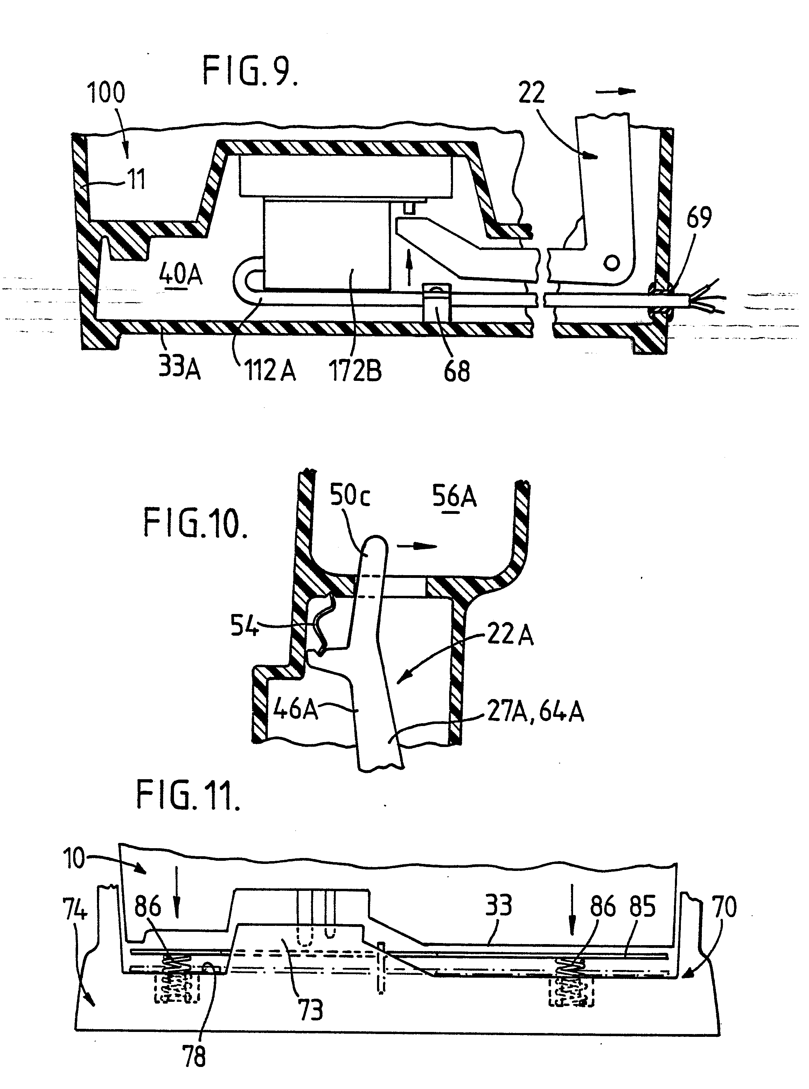

Referring to FIGURE 9, the appliance is provided with a modified base member 33A provided with socket connector means 72B and clamp means 68 to hold a mains supply lead 112A which runs within the hollow base 40A to a grommet protected exit 69. The means 72B is arranged so that it is detached from the pins only when the member 33A is detached, but an equivalent connector means could be releasably connected below the base member 33 of the previous embodiments.

The steam responsive mechanism 25 could be omitted, and in such forms of appliance the control means 22 may be operated manually by a part exposed at any suitable location on the appliance.

Referring to FIGURE 10, the appliance has modified control means 22A in which the control lever 27A or 64A has a short upstanding part 46A which provides the manually actuable part 50C at its upper end to extend upwards into the handle void 56A; and the over-centre spring 54 is arranged to act directly on the lever 27A or 64A.

The apparatus is inherently suitable for use with other safety means, for example, load sensitive means 84 (FIGURES 11), to ensure that power is not supplied to the appliance when empty. The load sensitive means 84 comprises a platform 85 which is supported by springs 86 and is located around the control part 73 and above the floor 78 of the support apparatus 70. The springs 86 are arranged so that:-

    a) when the vessel 10 contains less than a predetermined quantity (eg half a pint or one third of a litre) of water, the platform is held clear of the floor 78 to prevent the power supply switch 100 or 100A being actuated; and

    b) when the vessel contains more than said quantity of water, the platform is depressed, eg to contact the floor 78, sufficiently to permit actuation of the switch 100 or 100A.

The appliance may be of other forms, e.g. a coffee maker, cooking utensil, warming dish, kettle, mixer, blender, grinder, incubator or like laboratory, household or kitchen appliance incorporating a vessel, particularly an appliance which may be utilised in a particular location to perform a power consuming operation and which is taken thereafter to another location to be used or for the contents therein to be extracted, used, examined or consumed, and has the further advantage that the or at least a manually operable part of the control means can be conveniently situated in, on or adjacent a handle of the vessel, and electrically and spatially remote from the well protected electrical device and other electrical parts of the apparatus.

## Claims

1. Electrical apparatus comprising a vessel (10), an electrical device (17) and control means (22) to control said device; the vessel comprising an interior bounded by a bottom (13) and a wall (12) extending upwards from said bottom, and an actuation space (47) which is external to said interior and which extends upwardly at least partially alongside said wall; and said control means comprising switch means (23) actuable, by a non-electrical mechanism (24), to close an electrical supply connection to the electrical device; the apparatus of the invention being characterised in that;

    a) said electrical device (17) is supported by said bottom (13),

    b) said switch means (23) is actuable from below said bottom (13)

    c) said manually actuable mechanism (24) extends upwardly in said actuation space (47) to a part (50, 50A, 50B, 50C) exposed manual displacement, and extends inwardly from said space (47) to below said bottom (13) to actuate said switch means (23).

2. Electrical apparatus comprising an appliance, control means (22) to control the appliance, and support apparatus (70) to support the appliance; the support apparatus (70) including appliance locating means (71) and electrical connector means (72, 72A, 72B); the appliance comprising an electrical device (17); said control means (22) comprising switch means (23, 100, 100A) actuable for controlling electrical power supplied to the device via said electrical connector means; and characterised in that;

    a) the appliance comprises a vessel (10) having an interior bounded by a bottom (13) and a wall (12) extending upwards from said bottom, and an actuation space (47) which is external to said interior,

    b) said electrical device (17) is supported by said bottom (13),

    c) said switch means (23, 100, 100A) is actuable by a non-electrical manually actuable mechanism (24) from below said bottom (13), and

    d) said ·manually actuable mechanism (24) extends inwardly below said bottom (13) to actuate said switch means (23, 100, 100A).

3. Apparatus as claimed in claim 2 wherein said switch means is a power supply switch (100, 100A) provided in or on the support apparatus (70) and is arranged to automatically interrupt said supply of electricity to the connector means (72, 72A, 72B) when the appliance is removed from the support apparatus.

4. Apparatus as claimed in claim 2 wherein said support apparatus further comprises a power supply switch (100, 100A) to automatically interrupt said supply of electricity when the appliance is removed from the support apparatus.

5. Apparatus as claimed in claim 1, 2, or 4 wherein said switch means (23) and electrical device (17) are connected together to form an assembly (29) secured to said bottom (13), which assembly projects downwards from said bottom into a hollow base (40) of the apparatus.

6. Apparatus as claimed in any one of claims 1 to 5 wherein said mechanism (24) comprises a tension cord (63).

7. Apparatus as claimed in any one of claims 1 to 5 wherein said mechanism (24) comprises pivot means supporting a lever (27) having a first limb (46) extending upwardly from said pivot means, and a second limb (27) extending inwards to said switch means.

8. Apparatus as claimed in any one of the preceding claims wherein said electrical device (17) is an electrical immersion heater (18) which extends through a raised portion (14) of said bottom, and wherein an electrically heatable portion (19) of said heater extends in a trough (15) within interior around said raised central portion of said bottom.

9. Apparatus as claimed in claim 8 and further comprising a steam responsive mechanism (25) situated adjacent the top of said interior and operatively associated with said manually actuable mechanism 24, and passage means (53) connecting said interior and a steam space (52) around the steam responsive mechanism to direct steam generated in said interior to said steam space.

10. Apparatus as claimed in claim 8 or 9 wherein said vessel has a body moulded from plastics material; and wherein a metal heat shield (20) is clamped by said heater to said raised central portion, and is shaped to extend into the trough to below the heatable portion.

11. Apparatus as claimed in claim 4 or in any one of claims 5 to 10 as appended to claim 4, whereas said manually actuable mechanism is arranged to actuate both said switch means (23) and said power supply switch (100, 100A).

12. Apparatus as claimed in claim 2 or any one of claims 3 to 11 as appended to claim 2 and comprising load sensitive means (84) to inhibit operation of the power supply switch (100, 100A).

FIG.1A.

FIG. 1B.

0 254 482

FIG. 2.

0 254 482

FIG.3.

FIG.4.

FIG.5.

FIG.6.

FIG.7.

FIG.8.

# FIG.9.

# FIG.10.

# FIG.11.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 287 571 (PURPURA)<br>* Page 2, left-hand column, line 34 - right-hand column, line 29; figures 1,4 * | 1,6 | A 47 J 27/21<br>A 47 J 27/62 |
| | --- | | |
| Y | GB-A-2 150 759 (HADEN)<br>* Whole document * | 1,2 | |
| A | | 7,9,10 | |
| | --- | | |
| Y | US-A-2 528 191 (TURNER)<br>* Whole document * | 1,2 | |
| A | | 8,9 | |
| | --- | | |
| X | BE-A- 510 499 (GERTSCH)<br>* Whole document * | 1,6 | **TECHNICAL FIELDS SEARCHED (Int. Cl.4)**<br><br>A 47 J |
| | --- | | |
| A | US-A-2 016 358 (BLACKMUN et al.)<br>* Whole document * | 1,7 | |
| | --- | | |
| A | DE-A-1 440 990 (ECKERFELD)<br>* Claims 1,3; figure 4 * | 2-4 | |
| | --- | | |
| A | FR-A-1 183 571 (SUNBEAM)<br>* Whole document * | 1 | |
| | ---     -/- | | |

The present search report has been drawn up for all claims

| Place of search | Date of completion of the search | Examiner |
|---|---|---|
| THE HAGUE | 04-11-1987 | SCHARTZ J. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | GB-A-1 037 088 (THORNTON)<br>* Whole document * | 1,12 | |
| A | GB-A- 598 032 (THORNTON)<br>* Whole document * | 1,12 | |
| A | GB-A-2 133 959 (HADEN LTD)<br>* Page 2, lines 34-46, figure 1 * | 10 | |

-----

TECHNICAL FIELDS
SEARCHED (Int. Cl.4)

The present search report has been drawn up for all claims

| Place of search | Date of completion of the search | Examiner |
|---|---|---|
| THE HAGUE | 04-11-1987 | SCHARTZ J. |